# EUROPÄISCHE PATENTSCHRIFT

(11) **EP 0 428 810 B1**
(45) Veröffentlichungstag und Bekanntmachung des Hinweises auf die Patenterteilung: **24.08.1994**
(21) Anmeldenummer: 89710079.8
(22) Anmeldetag: 17.11.1989
(51) Int. Cl.: H04L 12/42

(54) **Verfahren zur Identifizierung von Busteilnehmern**
Method for identifying bus ticket-holders
Procédé d'identification d'abonnés de bus

(43) Veröffentlichungstag der Anmeldung: 29.05.1991
(73) Patentinhaber: Klöckner-Moeller GmbH, 53115 Bonn (DE)
(72) Erfinder: Högener, Hans Jürgen, Dipl-Ing., D-5216 Niederkassel-Mondorf (DE)

(56) Entgegenhaltungen:
- EP-A- 0 290 934
- WO-A-84/04861
- DE-A- 3 806 493
- ELEKTROTECHNISCHE ZEITSCHRIFT - ETZ. vol. 108, no. 2, Januar 87, BERLIN DE Seiten 52 - 57; B.KÖNIG et al.: "Glasfasertechnik für die Zugsteuerung"

## Beschreibung

Die Erfindung betrifft ein Verfahren zur Erfassung und Identifizierung von Busteilnehmern in einem 1-Master- n-Slave-System, wobei sich die vernetzten Teilnehmer in einem ringtopologisch angeordneten Bussystem befinden und mittels einem als übertragungsmedium ausgeführten Lichtwellenleiter Informationen mit geringen Datenmengen bis in die niedrigste Feldebene austauschen. Ein solches Verfahren ist in ELEKTROTECHNISCHE ZEITSCHRIFT - ETZ. vol. 108, no. 2, Januar 87, BERLIN DE Seiten 52 - 57; B. KÖNIG et al.: "Glasfasertechnik für die Zugsteuerung" veröffentlicht.

Bei den bekannten bitseriellen Übertragungsverfahren erfolgt die Identifizierung und Erfassung der Teilnehmer zyklisch und ist in jedem Übertragungstelegramm protokolliert. Die Effeziens der Nutzdatenübertragung leidet unter der ständigen Mitführung der Verwaltungsdaten, wie Kontrollstrukturen z.B Token-Verwaltung, Sicherheitszyklen und Frage- und Antwortzyklen. Gerade im Bereich der untersten Feldebene wird das Verhältnis der Nutzdaten zu den Verwaltungsdaten immer schlechter, da es sich in der Eingangs- Ausgangsebe meißt um einfachste Feld-Ein/Ausgabegeräte (Schalter, Tasten, Lampen, Schütze) und somit um Ein-Bit-Informationen handelt.

Die Erfindung stellt sich zur Aufgabe, ein Verfahren zur Erfassung und Identifizierung der Busteilnehmer in einem Ringsystem anzugeben, bei dem das übliche Overhead während der Übertragung der Nutzdaten auf ein Minimum begrenzt wird und die Erfassung und Identifizierung der Teilnehmer in einem Konfigurationszyklus erfolgt.

Diese Aufgabe wird erfindungsgemäß dadurch gelöst, daß das zentrale Steuersystem nach jeder Neuinitialisierung eine zyklische Konfiguration des Ringsystems einleitet, wobei jeder im Ringsystem eingebundene Teilnehmer derart erfaßt wird, daß in einem ersten Konfigurationszyklus die Teilnehmererkennung und Teilnehmeridentifizierung durch eine geographische Adressierung erfolgt, indem ein Konfigurationstelegramm, welches im wesentlichen aus einem Startbyte, einem Adressbyte mit der Wertigkeit 0 ond einer Folge von Datenbytes besteht, zum ersten Ringteilnehmer gesendet wird und daß dieser Teilnehmer das emfangene Adressbyte in seinem Adressregister als absolute Adresse ablegt und durch hinzuaddieren seiner hardwaremäßig eingestellten relativen Adresse das Adressbyte des Konfigurationstelegramms für den nächsten Teilnehmer neu generiert, welches dann mit dem, um die Adressbytezahl des Teilnehmers erhöhten Adressbyte zum Teilnehmer gesendet wird und daß der Teilnehmer und jeder weitere Teilnehmer diese Prozedur durchläuft und daß am Ende des Ringes dem zentralen Steuerungssystem ein genaues Abbild über die Anzahl der Teilnehmer, deren zugeordneter relativen Adresse aus der Summierung aller Adressbytezahlen im Adreßbyte und deren zugeordnete, errechnete und absolute Adresse aus den entsprechenden Arbeitsregistern, deren Werte in die Datenbytefolge des Konfigurationstelegramms, während des Konfigurationszyklusses, eingeschrieben wurden, zur Verfügung steht, wobei für einen intelligenten Teilnehmer mit variabler Datenlänge vier Datenbytes im Konfigurationstelegramm reserviert wird und daß sich das zentrale Steuerungssystem aus dem Konfigurationstelegramm eine Abbildliste erstellt.

In den abhängigen Ansprüchen 2 bis 4 sind vorteilhafte Weiterbildungen in Verbindung mit dem Hauptanspruch gekennzeichnet. Das vorgestellte erfindungsgemäße Verfahren bezieht sich auf ein 1-Master- n-Slavesystem. Die Mastersteuerung verwaltet das Protokoll der Konfigurationszyklen und besitzt am Ende der Konfigurationszyklen eine genaue Orientierung über die Anordnung der Teilnehmer im Ringsystem und errechnet aus der Kenntnis der relativen Adresse jedes Teilnehmeres deren absolute Adresse und schreibt diese in das Adressregister der Teilnehmer ein. Sind die zwei Konfigurationszyklen abgeschlossen, können n-Datenzyklen folgen, wobei nur die bei der Identifikation der Teilnehmer eermittelten Datenbytes den Datenzyklus belasten. Alle möglichen folgenden Datenbytes werden vom Kommunikationsprozokoll ignoriert und abgeschnitten. Problemlos können in Ringsystemen, die das erfindungsgemäße Verfahren nutzen, nach Auschaltung der Steuerspannung, Teilnehmer in den Ring eingefügt oder entfernt werden. Nach Einschalten der Steuerspannung erfolgt die Neuinitiallisierung des Ringsystems mit den beschriebenen Konfigurationszyklen. Nachfolgend sei das erfindungsgemäße Verfahren mittels der Figuren der beiliegenden Zeichnung mit einer beispielhaften Anordnung von Teilnehmern näher erläutert.

Es zeigen :

Fig. 1 eine einfache und beispielhafte Anordnung eines 1-Master - n-Slave-Ringsystems, bei dem das Verfahren Anwendung findet.

Fig. 2 das Telegramm für den Konfigurationszyklus 1, daß bei der beispielhaften Anordnung nach Fig. 1 Anwendung findet.

Fig. 3 das Telegramm für den Konfigurationszyklus 2, daß bei der beispielhaften Anordnung nach Fig. 1 Anwendung findet.

Fig. 4 die tabellarische Darstellung des Konfigurationszyklus 1, bezogen auf die Anordnung in Fig. 1.

Fig. 5 die tabellarische Darstellung des Konfigurattionszyklus 2, bezogen auf die Anordnung in Fig. 1.

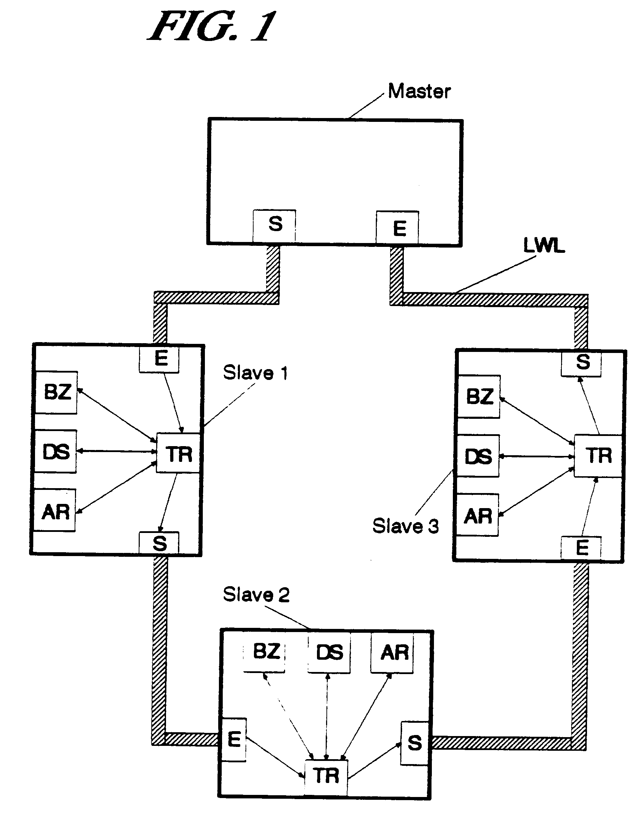

Die Fig. 1 zeigt eine einfache und beispielhafte Anordnung eines 1-Master - n-Slave-Ringsystems, bei dem das erfindungsgemäße Verfahren Anwendung findet. Hierbei besteht der Ring aus einem Master und 3 Untersystemen Slave 1 - Slave 3. Jedes Untersystem besteht im wesentlichen aus einer optoelektrischen Emfangseinrichtung E und einer elektro optischen Sendeeinrichtung S, aus einem Telegrammregister TR, einem Arbeitsregister AR, einem Datenspeicher DS und einer Einrichtung BZ zur Einstellung der relativen Adresse. Die Untersysteme ohne eigene Intelligenz sind auf eine feste Datenlänge von maximal 4 Byte begrenzt. In dieser beispielhaften Anordnung Fig.1 beträgt die relative Adresse BZ des Untersystems Slave 1 drei Byte (16- 24V-Ausgänge) und die des Untersystems 3 zwei Byte (8-24V-Eingänge). Das Untersystem Slave 2 besitzt eine eigene Intelligenz und hat eine variable Datenlänge. In diesem Fall 24 Byte (16 analoge Eingänge und 4 analoge Ausgänge).

Die Teilnehmer, Master und Untersysteme Slave 1 - Slave 3 sind mittels Lichtwellenleiter ringtopologisch angeordnet. Die Konfiguration, d.h. die Erfassung und Identifizierung der Ringteilnehmer erfolgt nach der Initialisierung und Ringsynchronisierung durch das zentrale Steuersystem Master.

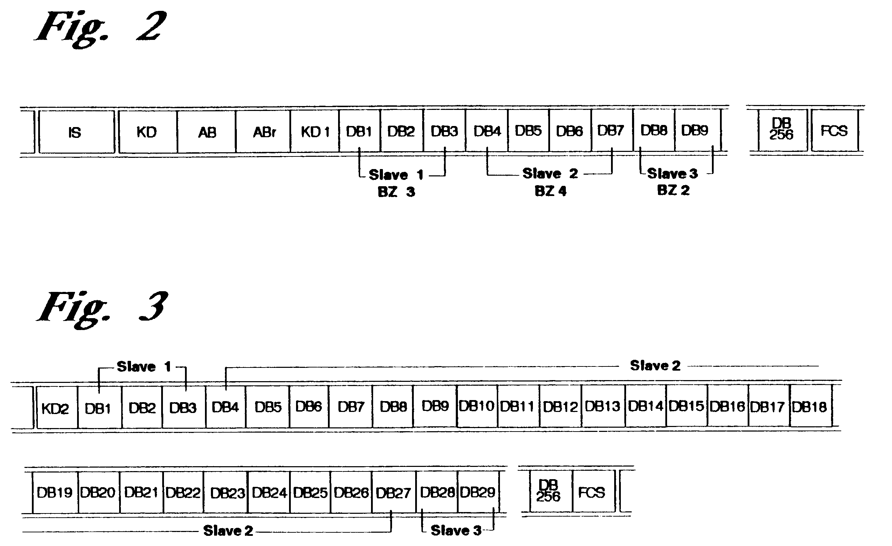

Fig. 2 zeigt das Telegramm des Konfigurationszyklus 1, daß erfindungsgemäß bei der beispielhaften Anordnung nach Fig. 1 Anwendung findet. Nach der Ringsynchronisation befinden sich alle Untersysteme Slave 1 - Slave 2 im Zustand "Warten" und warten auf Anweisung vom Master. Diese Anweisungen werden im Konfigurationszyklus und im Datenzyklus gesendet. Der Konfigurationszyklus KZ1 startet ausgehend vom Zustand "Listen Delimiter"und der Master sendet "Idle-Signal" (log.1) mindestens 8 Bitzeiten.

Es folgt der "Konfigurationsdelimiter" als Startbyte KD und daran anschließend das Adressbyte AB und das Adressbyte "repeat" ABr. Jeder Teilnehmer Slave 1 - Slave 3 vergleicht die Adressbytes AB und ABr auf Übereinstimmung. Bei Nichtübereinstimmung wird wieder der Zustand "Listen Delimiter" eingenommen. Einem weiteren "Konfigurations Delimiter" als Startbyte KD1 folgen die Datenbytes DB1-DB256.

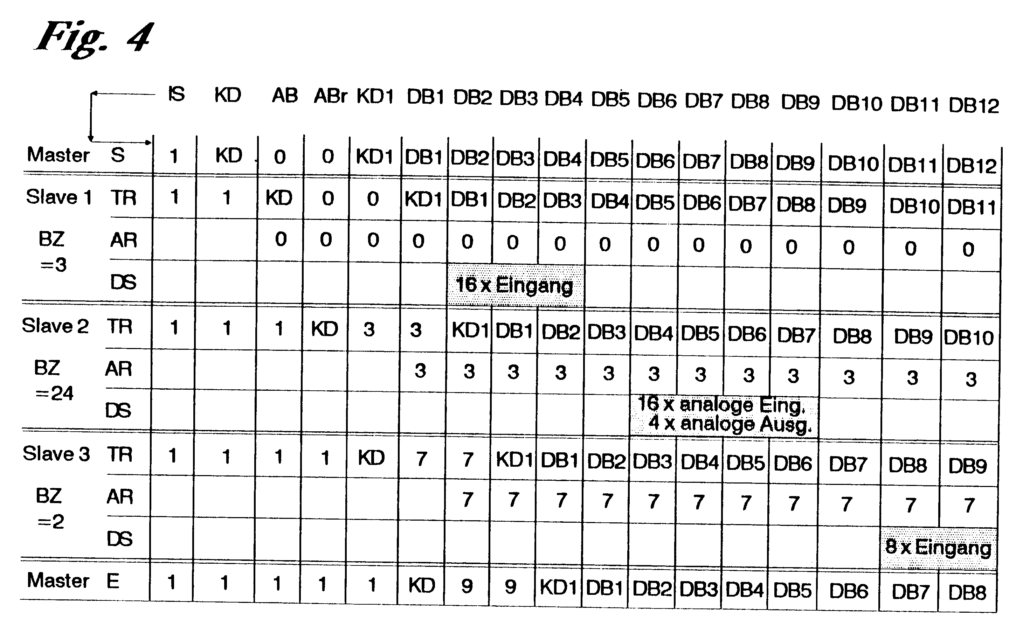

Anhand der Fig. 4, die eine tabellarische Darstellung des Konfigurationszyklus 1 darstellt, soll dieser näher beschrieben werden. Erkennt das Untersystem Slave 1 nach Idle-Signal 15 das Startbyte KD, beginnt es mit seiner Konfiguration. Ist der gesamte Ring synchronisiert, so befinden sich alle Teilnehmer, Master und Slave 1-3 im Zustand "Listen Delimiter " (Warten). Der Master sendet das Startbyte KD, das Adressbyte AB mit der Wertigkeit "0", die Frame-Check-Summe über das Adressbyte AB entsprechend dem Adressbyte "repeat" ABr also nocheinmal "0", dann das Startbyte KD1, gefolgt von, während dem Konfigurationszyklus KZ1 definierbaren 256 Byte. Der erste Ringteilnehmer Slave 1 ist ein Teilnehmer mit fester Bytezahl BZ und ist hardwaremäßig fest auf 3 Byte eingestellt. Die vom Master emfangene Adresse "0" speichert Slave 1, über sein Transferregister TR, in seinem Arbeitsregister AR ab, addiert seine 3 Byte auf, trägt sie mittels des Transferregisters TR in das Adressbyte AB des Konfigurationstele gramms KT1 ein und sendet die Adresse 3 dem nächsten Untersystem Slave 2. Dann bildet Slave 1 die Frame-CheckSumme von der Adresse 3 und sendet sie Über das Transferregister TR dem Untersystem Slave 2 als Adressbyte "repeat" ABr. Dann emfängt Slave 1 das nächste Startbyte KD1 und weiß, daß die ersten drei Datenbytes, die er emfängt, für ihn bestimmt sind. Slave 1 ließt im ersten Byte die Watchdog-Time und überschreibt das Datenbyte DB1 mit seiner im Datenspeicher gekennzeichneten Identifikation. In diesem Fall einen 3 Byte Teilnehmer mit 8 × 24 V-Eingängen. Die Datenbytes DB2 und DB3 bleiben ungenutzt. Alle folgenden Datenbytes werden mit Bildung der Frame-CheckSumme nur noch durchgereicht. Das Untersystem Slave 2 hat die Adresse "3" von Slave 1 erhalten und schreibt diese Adresse in sein Arbeitsregister AR. Slave 2 ist ein intelligentes Untersystem mit variabler Datenlänge, die vom Untersystem Slave 2 selbst, oder vom Master zugewiesen werden kann. Damit kann der Ring sich dynamisch optimal an seine zeitlich veränderliche Problemstellung anpassen. Für Slave 2 werden 4 Datenbyte fest vorgewählt. Die Addition des Adressbytes mit der vorgewählten Bytezahl 4 ergibt die Adresse "7", die zum Slave 3 gesendet wird. Die Identität von Slave 2 (24 analoge Eingänge, 4 analoge Ausgänge) und seine relative Adresse (24 Byte) werden in das das Datenbyte DB4 eingeschrieben. Slave 3 schreibt die vom Slave 2 gesendete Adresse "7" in sein Arbeitsregister AR, addiert seine relative Adresse mit der Bytezahl BZ 2 auf. Slave 3 schreibt seine Identifikation in das Datenbytebyte DB8 ein, und sendet dem Master die Adresse "9".

Der Konfigurationszyklus KZ1 endet mit dem vom Master emfangenen letzten Datenbyte DB256 und als Abschluß die Frame-Check-Summe. Zu diesem Zeitpunkt sind alle Untersys teme Slave 1-Slave 3 erfaßt und identifiziert. Der Master hat sich ein Abbild vom Ringsystem geschaffen. Er kennt die Position und die Anzahl der Teilnehmer, deren relative Adresse sowie deren Identifikation. Das Untersystem Slave 2 wurde von ihm als intelligenten Teilnehmer ermittelt, der eine variable Datenlänge aufweist und zur absoluten Adressierung aller Teilnehmer am Ring einen zweiten Konfigurationszyklus KZ2 erzwingt.

Fig. 3 zeigt das Telegramm des Konfigurationszyklus KZ2. Diese Zweite Konfigurationszyklus wird wegen der Existenz des intelligenten Teilnehmers Slave 2 und dessen variable Datenlänge notwendig. In diesem Zyklus wird jedem Teilnehmer die absolute Adressierung in das Arbeitsregister geschrieben.

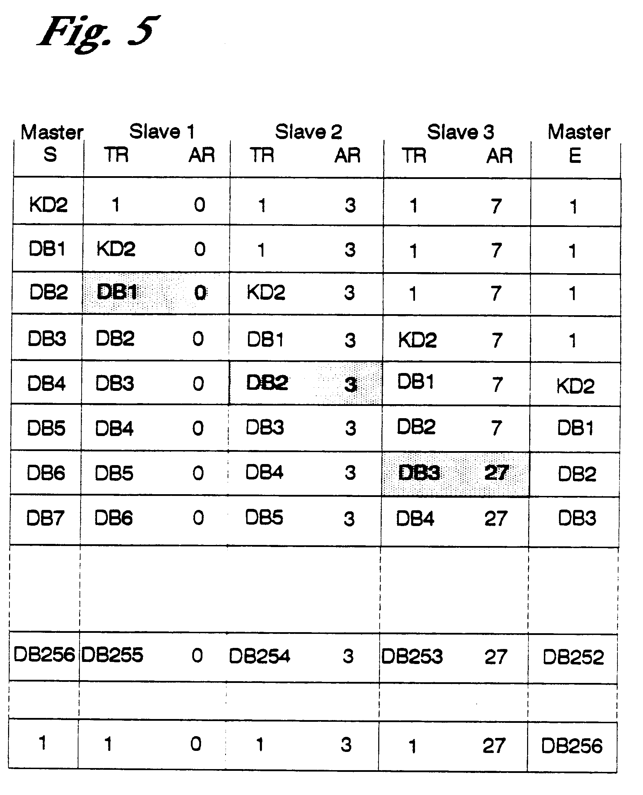

Fig. 5 zeigt eine tabellarische Darstellung des Konfigurationszyklus KZ2, bezogen auf die Anordnung in Fig. 1. Nach dem "Konfigurations Delimiter" als Startbyte KD2 sendte der Master die Datenbytes in aufsteigender Reihenfolge. Im Datenbyte DB1 steht die absolute Adresse "0" für Slave 1. Sie wird nochmals in das Arbeitsregister geschrieben. Für Slave 2 steht im Datenbyte DB2 die Absolute Adresse "3". Im Datenbyte 3 des nächsten und letzten Ringteilnehmers, Slave 3, steht die Summe aus relativer Adresse "24" und der absoluten Adresse "3" des Teilnehmers Slave 2. Die absolute Adresse "27" wird dem Teilnehmer Slave 3 in das Arbeitsregister AR eingeschrieben.

Die Konfiguration ist abgeschlossen, wenn das Datenbyte DB256 den Emfänger des Masters erreicht. Das System befindet sich danach wieder im Zustand "Listen Delimiter". Der Master sendet Idle-Signal (log. 1) und wartet auf n-Datenzyklen.

Im Konfigurationszyklus wird das erste Datenbyte jeweils zum Konfigurationsbyte. Dabei kann das vom Master gesendete Konfigurationsbyte z.B die Einstellund des Watchdog-Timers beinhalten und in den Datenspeicher DS der Untersysteme eingeschrieben werden. Im gleichen Zyklus überschreibt das Untersystem dieses Konfigurationsbyte mit seiner Identität.

## Patentansprüche

1. Verfahren zur Erfassung und Identifizierung von Busteilnehmern in einem 1-Master- n-Slave-System, wobei die vernetzten Teilnehmer in einem ringtopologisch angeordneten Bussystem befinden und mittels einem als übertragungsmedium ausgeführten Lichtwellenleiter Informationen mit geringen Datenmengen bis in die niedrigste Kommunikationsebene austauschen, **dadurch gekennzeichnet,** daß das zentrale Steuersystem (Master) nach jeder Neuinitialisierung eine zyklische Konfiguration des Ringsystems einleitet, wobei jeder im Ringsystem eingebundene Teilnehmer (Slave 1-Slave n) derart erfaßt und identifiziert wird, daß in einem ersten Konfigurationszyklus (KZ1) die Teilnehmererkennung und Teilnehmeridentifizierung durch eine geographische Adressierung erfolgt, indem ein Konfigurationstelegramm (KT 1), welches im wesentlichen aus einem Startbyte (KD), einem Adreßbyte (AB) mit der Wertigkeit 0, einem weiteren Adressbyte (ABr) mit der Wertigkeit 0 und einer Folge von Datenbytes (DB0 - DBn) besteht, zum ersten Ringteilnehmer (Slave 1) gesendet wird und daß dieser Teilnehmer (Slave 1) das emfangene Adressbyte (AB) in seinem Adreßregister (AR) als absolute Adresse ablegt und durch hinzuaddieren seiner hardwaremäßig eingestellten relativen Adresse (BZ) das Adressbyte (AB) des Konfigura tionstelegramms (KT1) für den nächsten Teilnehmer (Slave 2) neu generiert, welches dann mit dem, um die Adressbytezahl (BZ) des Teilnehmers (Slave 1), erhöhte Adressbyte (AB) zum Teilnehmer (Slave 2) gesendet wird und daß der Teilnehmer (Slave 2) und jeder weitere Teilnehmer (Slave 3 - Slave n) diese Prozedur durchläuft und daß am Ende des Ringes dem zentralen Steuerungssystem (Master) ein genaues Abbild über die Anzahl der Teilnehmer (Slave 1 - Slave n), deren zugeordneter relativen Adresse aus der Summierung aller Adressbytezahlen (BZ) im Adreßbyte (AB) und deren zugeordnete errechnete und absoluten Adresse aus den entsprechenden Arbeitsregistern (AR), deren Werte in die Datenbytefolge (DB0-DBn) des Konfigurationstelegramms (KT1), während des Konfigurationszyklusses (KZ1), eingeschrieben wurden, zur Verfügung steht, wobei für einen intelligenten Teilnehmer (Slave 3) mit variabler Datenlänge vier Datenbytes (DB5-DB8) im Konfigurationstelegramm (KT1) reserviert wird und daß sich das zentrale Steuerungssystem (Master) aus dem Konfigurationstelegramm (KT1) eine Abbildliste (ABL) erstellt.

2. Verfahren zur Konfiguration von Steuerungssystemen nach Anspruch 1, **dadurch gekennzeichnet,** daß jeder Teilnehmer (Slave 1 - Slave n) entsprechend seiner Adresse (AB) während der Konfiguration seine Identifikation in die Datenbytefolge (DB0 - DBn) des Konfigurationstelegramms (KT1) einließt.

3. Verfahren zur Konfiguration von Steuerungssystemen nach Ansprüchen 1 und 2, **dadurch gekennzeichnet,** daß das zentrale Steuersystem aus seiner, im ersten Konfigurationszyklus (KZ1) erstellten Abbildliste einen Teilnehmer (Slave 3) mit variabler Datenlänge erkennt und zu einem zweiten Konfigurationszyklus (KZ2) gezwungen wird, indem ein Konfigurationstelegramm (KT2), bestehend aus einem Startbyte (KD2) und den nachfolgenden Datenbytes (DB0-DBn), in den Ring gesendet wird wobei die nach dem Startbyte (KD2) folgende Datenbytes (DB) in aufsteigender Reihenfolge, gemäß der Anzahl der Teilnehmer (Slave 1-Slave n) und ihrer entsprechenden Bytezahl (BZ), reserviert sind und mittels denen jeder Teilnehmer nocheinmal seine absolute Adresse (AB) in sein Adressregister (AR) einliest.

4. Verfahren zur Konfiguration von Steuersystemen nach den Ansprüchen 1 bis 3, **dadurch gekennzeichnet,** daß den Konfigurationszyklen (KZ1, KZ2) eine beliebige Anzahl von Datenzyklen folgt und daß eine erneute Konfiguration erst nach Aus- und Wiedereinschaltung der Steuerspannung erfolgt.

## Claims

1. Procedure allowing the registration and identification of bus participants in a one-master-n-slave system, the network participants being situated within a bus system with a ring topological arrangement and exchanging information comprising small amounts of data by means of an optical waveguide arranged as a medium of transmission up to the lowest level of communication, in which the central control system (master) starts a cyclic configuration of the ring system after every reinitialization during which every participant involved in the ring system (slave 1 through slave n) is registered and identified in such a way that participant recognition and participant identification is done by geographic addressing in a first configuration cycle (KZ1), during which a configuration telegram (KT 1) which essentially consists of a start byte (KD), an address byte (AB) with a valence of 0, another address byte (ABr) with a valence of 0, and a series of data bytes (DB0 through DBn) is sent to the first ring participant (slave 1) and in which this participant (slave 1) files the received address byte (AB) as an absolute address in its address register (AR) and regenerates the address byte (AB) of the configuration telegram (KT1) for the next participant (slave 2) by adding its relative address (BZ) set on the hardware level, this configuration telegram (KT1) then includes the address byte (AB) increased by the address byte number (BZ) of the participant (slave 1) and it is sent to the participant (slave 2) and in which the participant (slave 2) and every other participant (slave 3 through slave n) follows this procedure and in which the central control system (master) at the end of the ring has a precise picture of the number of participants (slave 1 through slave n), of the relative address assigned to them resulting from the adding-up of all address byte numbers (BZ) in the address byte (AB) and of the absolute address assigned to them and arrived at by calculation obtained from the corresponding working registers (AR), the values n of which have been written into the data byte sequence.(DBO through DBn) of the configuration telegram (KT1) during the configuration cycle (KZ1), while four data bytes (DB5-DB8) are reserved for an intelligent participant (slave 3) with a variable data length in the configuration telegram (KT1) and in which the central control system (master) prepares itself a map list (ABL) on the basis of the configuration telegram (KT1).

2. Procedure allowing the configuration of control systems as claimed in claim 1, wherein every participant (slave 1 through slave n) enters its identification into the data byte sequence (DB0 through DBn) of the configuration telegram (KT1) according to its address (AB) during configuration.

3. Procedure allowing the configuration of control systems as claimed in claims 1 and 2, wherein the central control system recognizes a participant (slave 3) with a variable data length in its map list prepared during the first configuration cycle (KZ1) and is forced into a second configuration cycle (KZ2) during which a configuration telegram (KT2) consisting of a start byte (KD2) and of the subsequent data bytes (DB0 through DBn) is sent into the ring, while the data bytes (DB) following after the start byte (KD2) are reserved in an ascending order according to the number of participants (slave 1 through slave n) and their corresponding byte numbers (BZ) and are used by every participant to write its absolute address (AB) into its address register (AR) once again.

4. Procedure allowing the configuration of control systems as claimed in claims 1 through 3, wherein any number of data cycles follows on the configuration cycles (KZ1, KZ2) and wherein a new configuration is only done after the cutting and resetting of the control voltage.

## Revendications

1. Procédé permettant l'enregistrement et l'identification de participants à un bus à l'intérieur d'un système consistant en 1 maître et n esclaves, les participants au réseau étant regroupés au sein d'un système de bus disposé selon une topologie d'anneau et échangeant des informations comprenant des faibles volumes de données jusqu'au plus bas niveau de communication grâce à un conducteur d'ondes lumineuses réalisé sous forme de milieu de transmission, caractérisé en ce que le système central de commande (maître) procède à une configuration cyclique après chaque réinitialisation, configuration pendant laquelle chaque participant relié au système d'anneau (esclave 1 à esclave n) est enregistré et identifié de telle manière à ce que, lors d'un premier cycle de configuration (KZ1), la reconnaissance et l'identification des participants se font grâce à un adressage géographique au cours duquel un télégramme de configuration (KT 1), qui consiste essentiellement en un octet d'amorçage (KD), un octet d'adresse(AB) de valence 0, en un autre octet d'adresse (ABr) de valence 0 et en une série d'octets de données (DB0 à DBn), est envoyé au premier participant de l'anneau (esclave 1) et que ce participant (esclave 1) enregistre l'octet d'adresse (AB) reçu dans son registre d'adresses (AR) sous forme d'adresse absolue et régénère l'octet d'adresse du télégramme de configuration (KT1) destiné au participant suivant (esclave 2) en y additionnant son adresse relative (BZ) réglée au niveau du matériel, télégramme qui, avec l'octet d'adresse (AB) augmenté du nombre d'octets d'adresse (BZ) du participant (esclave 1), est alors envoyé au participant (esclave 2), et que le participant (esclave 2) et tout autre participant (esclave 3 à esclave n) suivent ce procédé et que, à la fin de l'anneau, le système central de commande (maître) dispose d'une image précise du nombre des participants (esclave 1 à esclave n), des adresses relatives assignées à eux et obtenues grâce à l'addition de l'ensemble des nombres d'octets d'adresse (BZ) dans l'octet d'adresse (AB) et de l'adresse absolue assignée à eux et obtenue par calcul à partir des registres de travail (AR) correspondantes, dont les valeurs n ont été inscrits dans les séquences d'octets de données (DB0 à DBn) du télégramme de configuration (KT1) au cours du cycle de configuration (KZ1), quatre octets de données (DB5 à DB8)étant réservés au télégramme de configuration (KT1) pour un participant intelligent (esclave 3) avec une longueur de données variable et que le système central de commande (maître) se prépare une liste des images (ABL) à partir du télégramme de configuration.

2. Procédé permettant la configuration de systèmes de commande selon la revendication 1, caractérisé en ce que, au cours de la configuration, chaque participant (esclave 1 à esclave n) inscrit son identification à la séquence d'octets de données (DB0 à DBn) du télégramme de configuration (KT1) en fonction de son adresse (AB).

3. Procédé permettant la configuration de systèmes de commande selon les revendications 1 et 2, caractérisé en ce que le système central de commande, à partir de sa liste d'images établie lors du premier cycle de configuration (KZ 1), reconnaît un participant (esclave 3) ayant une longueur de données variable et est forcé de faire un deuxième cycle de configuration (KZ2), lors duquel un télégramme de configuration (KT2) comprenant un octet d'amorçage (KD2) et les octets de données qui s'ensuivent (DB0 à DBn) est envoyé dans l'anneau, les octets de données (DB) qui suivent l'octet d'amorçage (KD2) étant réservés en séquence ascensionnelle en fonction du nombre des participants (esclave 1 à esclave n) et selon leur nombre respectif d'octets (BZ), octets de données grâce auxquels chaque participant inscrit encore un fois son adresse absolue (AB) à son registre d'adresses (AR).

4. Procédé permettant la configuration de systèmes de commande selon les revendications 1 à 3, caractérisé en ce qu'un nombre quelconque de cycles de données suit aux cycles de configuration (KZ1, KZ2) et qu'une nouvelle configuration ne sera faite qu'après coupure et réenclenchement de la tension de contrôle.
